# EUROPEAN PATENT SPECIFICATION

(11) **EP 0 524 027 B1**
(45) Date of publication and mention of the grant of the patent: **12.01.2000**
(21) Application number: 92306607.0
(22) Date of filing: 20.07.1992
(51) Int. Cl.: C08G 63/66, C08L 67/00, G03G 9/087

(54) **Polyester resin and its use as a toner binder**
Polyesterharz und seine Verwendung als Bindemittel für Toner
Résine de polyester et son utilisation comme toner

(30) Priority: 18.07.1991 JP 20320191
(43) Date of publication of application: 20.01.1993
(73) Proprietor: SANYO CHEMICAL INDUSTRIES, LTD., Higashiyama-ku Kyoto 605 (JP)
(72) Inventor: Fukuda, Masao, Higashiyama-ku, Kyoto, 605 (JP); Nitta, Takemi, Higashiyama-ku, Kyoto, 605 (JP)
(74) Representative: Coleiro, Raymond

(56) References cited:
- DE-A- 2 030 090
- FR-A- 2 256 444
- GB-A- 1 211 208
- GB-A- 1 213 681
- US-A- 1 867 583
- US-A- 3 244 770
- US-A- 3 458 477
- RAPRA Abstracts, vol. 5, no. 6, June 1970, Oxford, GB; abstract 4248, Z.V. MIKHAILOVA, ET AL: 'Unsaturated Oligoesters based on Novolak type PF resins'

## Description

This application claims the priority of Japanese Application No. Hei 3-203201 filed on July 18, 1991, which is incorporated herein by reference.

This invention relates to a polyester resin and a toner binder and a toner for electrophotography in which the polyester resin is employed.

In a method of electrophotography, an electrostatic latent image is generated onto a photosensitive medium, the image is developed with a dry toner, the toner image is transferred onto a sheet of copying paper, then heat-fixing is applied onto the image, so as to obtain a duplication.

Conventionally, as a toner binder which is a component of this dry toner, polystyrene resin, styrene-acrylic copolymer, polyester resin and epoxy resin were generally used. Among these resins, polystyrene series resins such as polystyrene resin and styrene-acrylic copolymers were widely used because of their desirable characteristics of, for example, thermoplasticity, grindability, a certain electrostatic charge, and moreover low cost. However, recently, polyester resins whose fixability at low temperature is excellent has taken the place of styrene resin. A polyester resin of the cross-linking type has been found to be especially remarkable. A polyester resin of this type is disclosed in US-A-3681106 which polyester resin contains units of an alkylene oxide adduct of a polyhydric alcohol which is trihydric or higher, for example, trimethyol propane or pentaerythritol. US-A-4657837 discloses a polyester resin which contains units of trimellitic acid. However, when using the above mentioned polyester resins problems arise in that resistance to offset and/or fixability at low temperature is insufficient for practical use.

Accordingly, we conducted investigations in an attempt to obtain a toner binder which is excellent in fixability at low temperature and in resistance to offset and so developed a polyester resin of the invention.

Accordingly, the present invention provides the use, as a toner binder, of a polyester having units derived from a polyol, which polyol is an oxyalkylene ether of a phenolic resin. The oxyalkylene ether preferably has an average number of oxyalkylene units per molecule of from 2 to 15 and preferably includes as a said oxyalkylene unit, an oxyethylene unit or an oxypropylene unit.

A polyester resin which may be used for a toner binder, has units derived from a polyol, which polyol is an oxyalkylene ether of a phenolic resin, preferably a phenol-formaldehyde or phenol amine resin. The polyester may have a glass transition temperature of from 30 to 85°C and preferably has a hydroxyl value of from 5 to 200 inclusive and an acid value of from 0.5 to 30 inclusive.

The polyester may be obtained by reaction of a polycarboxylic acid or its derivative with a polyol which contains a phenolic resin having an oxyalkylene unit. The phenolic resin having an oxyalkylene unit may be obtained by reaction of a phenolic resin with a compound possessing one epoxy ring in its molecule.

A preferred polyester resin which may be used for a toner binder is one possessing, on average, 2 to 15 oxyalkylene units in a molecule of phenolic resin. A preferred phenolic resin is a phenolic resin of the novolak type having a number average molecular weight of from 450 to 3000. Among the polyester resins those usually preferred as toner binders are those having a glass transition temperature of from 30 to 85°C, and a softening temperature of from 70 to 160°C. Colorants, and if necessary, release agents, fluidity improvers, charge controlling agents, magnetic substances, and cross-linking agents may be added to this toner bonder to provide a toner of this invention. Among these additives, a cross-linking agent is effective for improving resistance to offset by being added from 1 to 10 parts by weight based on 100 parts by weight of the polyester resin, and being allowed to react with the polyester resin to cross-link the polyester resin.

Also the polyester resin for the toner binder of this invention may be used for the production of polyurethanes, binders of glass fiber mat and carbon fiber mat, a coating material such as a powder coating compound or curing agent for epoxy resin.

Firstly, the reactants from which a polyester resin of this invention may be obtained, namely a polycarboxylic acid or its derivative (A), and polyol (B) which contains a phenolic resin possessing at least one oxyalkylene unit, and their respective proportions are described in order. The term, "polyester resin" refers to a polyester resin of this invention illustrated hereinafter, unless otherwise specified.

The polycarboxylic acid or its derivative (A) includes a dibasic carboxylic acid or its derivatives, and there may be added a tribasic or higher carboxylic acid or its derivative.

Specific examples of this dibasic carboxylic acid include:
(1) aliphatic dicarboxylic acids of 2 to 20 carbon atoms such as maleic acid, fumaric acid, succinic acid, adipic acid, cebacic acid, malonic acid, azelaic acid, mesaconic acid, citraconic acid and glutaconic acid:
(2) cycloaliphatic dicarboxylic acids of 8 to 20 carbon atoms such as cyclohexane dicarboxylic acid and methylnadic acid:
(3) aromatic dicarboxylic acids of 8 to 20 carbon atoms such as phthalic acid, isophthalic acid, terephthalic acid, toluene dicarboxylic acid and naphthalene dicarboxylic acid;
(4) either alkyl or alkenyl succinic acid possessing a hydrocarbon group of 4 to 35 carbon atoms as a side chain, such as isododecenylsuccinic acid and dodecenylsuccinic acid; and
(5) anhydrides or lower alkyl, especially C_{1 - 4} alkyl, esters, eg methyl or butyl, of the above-mentioned dibasic carboxylic acids.

Among these substances, preferred are (1), (3), (4), and anhydrides or lower alkyl esters of these dicarboxylic acids, and especially preferred are maleic anhydride, fumaric acid, isophthalic acid, terephthalic acid, alkylsuccinic acid, alkylsuccinic anhydride, alkenylsuccinic acid, alkenylsuccinic anhydride, and dimethylterephthalate. Maleic anhydride, and fumaric acid are preferred because of their higher reactivity, and isophthalic acid and terephthalic acid are characterised in that they elevate the glass transition temperature of polyesters. Alkyl succinic acid, alkenyl succinic acid, and anhydrides of these succinic acids improve the ability for dispersing a colorant into the toner containing a polyester resin employing these compounds.

Specific examples of tribasic or higher polycarboxylic acids include:
(1) aliphatic polycarboxylic acids of 7 to 20 carbon atoms such as 1,2,4-butanetricarboxylic acid, 1,2,5-hexanetricarboxylic acid, 1,3-dicarboxyl-2-methyl-2-methylenecarboxypropane, methylenecarboxypropane, and 1,2,7,8-octanetracarboxylic acid;
(2) cycloaliphatic polycarboxylic acids of 9 to 20 carbon atoms such as 1,2,4-cyclohexanetricarboxylic acid;
(3) aromatic polycarboxylic acids of 9 to 20 carbon atoms such as 1,2,4-benzenetricarboxylic acid, 1,2,5-benzenetricarboxylic acid, 2,5,7-naphthalenetricarboxylic acid and 1,2,4-naphthalene tricarboxylic acid, pyromellitic acid and benzophenontetracarboxylic acid; and
(4) anhydrides or lower alkyl esters (methyl, butyl, for example) of the above-mentioned polycarboxylic acids.

When using a tribasic or higher polycarboxylic acid or its derivative, among the above-mentioned, preferred are polycarboxylic acids mentioned in (3) as well as anhydrides and lower alkyl esters of (3), especially, 1,2,4-benzenetricarboxylic acid, 1,2,5-benzenetricarboxylic acid as well as anhydrides and lower alkyl esters of these substances. They are preferred because they elevate resistance to offset for a toner containing a polyester resin wherein these compounds are employed. When using tribasic or higher polycarboxylic acids, the proportion thereof based on (A) is usually up to 30 mol %, preferably up to 20 mol %, and further preferably up to 10 mol %.

The polyol component (B) contains a phenolic resin possessing an oxyalkylene unit, and may also contain other dihydric, and trihydric or higher alcohols. A phenolic resin possessing an oxyalkylene unit is, usually, a reactant of a phenolic resin and a compound possessing an epoxy ring in its molecule. The phenolic resin may be either a novolak or a resol type. Moreover, a phenolic resin of the resol type in liquid form or a phenolic resin of a benzilic ether type either having a viscosity within a range of from 500 to 100,000 cps inclusive at 25°C, and a phenolic resin of the water soluble resol type having a viscosity of its 70 wt % solution in a range of from 10 to 100,000 cps inclusive at 25°C may be used. However, in general, a phenolic resin of the novolak type is preferred to one of the resol type. These types of phenolic resins are described, for example, in a paragraph of "Phenolic Resin" in Encyclopedia of Polymer Science a Technology (Interscience Publishers), vol.10. page 1. A novolak type phenolic resin may be provided by employing a catalyst, such as an inorganic acid, eg hydrochloric acid, phosphoric acid or sulfuric acid; an organic acid, eg paratoluenesulfonic acid or oxalic acid, or a metal salt, eg zinc acetate. A resol type of phenolic resin may be provided by employing a catalyst such as ammonia; an organic amine, eg trimethyl-amine or ethylenediamine; a metallic hyroxide, eg sodium hydroxide or potassium hydroxide; or a metallic oxide such as magnesium oxide. Both of these phenolic resin types may be produced from phenols and aldehyde compounds. Moreover, phenolic resins of the benzilic type (Jp. Pat. Appl. No. Sho 47-50873) may be used. These are produced by employing metallic salts such as lead naphthenate and zinc naphthenate as catalysts.

Phenols which may be used for this phenolic resin include phenol, substituted phenols and bisphenols possessing a hydrocarbon group of 1 to 35 carbon atoms and/or one or more halogen groups as substituent groups. Examples of substituted phenols include cresol (ortho, meta, or para), ethylphenol, nonyl phenol, octyl phenol, phenylphenol, styrenated phenol, isopropenyl phenol, 3-chlorophenol, 3-bromophenol, 3,5-xylenol, 2,4-xylenol, 2,6-xylenol, 3,5-dichlorophenol, 2,4-dichlorophenol, 3-chloro-5-methylphenol, dichloroxylenol, dibromoxylenol, 2,4,5-trichlorophenol and 6-phenyl-2-chlorophenol. Examples of bisphenols include bisphenol A and bisphenol F. Phenols may be used in combination of two or more. Among these phenols, preferred are phenol and substituted phenols, and especially preferred are phenol, cresol, t-butyl phenol, styrenated phenol having one or two styrene units and nonyl phenol.

Aldehydes or amines which may be used for a phenolic resin include, formalin (solution of formaldehyde in various degrees of its concentration), for example, paraformaldehyde, trioxane and hexamethylenetetramine.

The number average molecular weight of the phenolic resin is usually from 300 to 8,000, preferably from 350 to 3,000, and most preferably from 400 to 2,000. The number average for aromatic nuclei numbers (number of aromatic rings) of the phenolic resin is usually from 3 to 50, preferably from 4 to 20, and most preferably from 4 to 10. The softening temperature of the phenolic resin is, as measured by JIS K2531; Ring and Ball method, usually from 40 to 180°C, preferably from 40 to 150°C, and most preferably 50 to 130°C. When the softening temperature is below 40°C, it may be blocking at an ordinary temperature, and when the softening temperature exceeds 180°C, it may be hard to introduce an oxyalkylene unit because there arises difficulty in melting.

Specific examples of compounds which possess an epoxy ring are ethylene oxide, 1,2-propylene oxide, 1,2-butylene oxide, 2,3-butylene oxide, isobutylene oxide, styrene oxide and epichlorohydrin. Glycidyl ethers of aliphatic monohydric alcohols of 1 to 20 carbon atoms may also be applicable. Among these oxirane compounds, preferred are ethylene oxide and/or 1,2-propylene oxide. In a phenolic resin which possesses an oxyalkylene unit, per 1 mol of phenolic resin, an average additional mol number of a compound possessing an epoxy ring for constituting an oxyalkylene unit is usually from 1 to 30 mol, preferably from 2 to 15 mol, and more preferably from 2.5 to 10 mol. An average additional mol number of a compound possessing an epoxy ring per phenolic hydroxyl group in a phenolic resin is usually from 0.1 to 10 mol, preferably from 0.1 to 4 mol, and more preferably from 0.2 to 2 mol. The number average molecular weight of a phenolic resin possessing an oxyalkylene unit is usually from 300 to 10,000, preferably from 350 to 5,000, and more preferably from 450 to 3,000. Its hydroxyl value, the sum of alcoholic and phenolic hydroxyl groups, is usually from 10 to 550, preferably from 50 to 500, and more preferably from 100 to 450 mgKOH/g. Among these hydroxyl groups, the phenolic hydroxyl value in the phenol resin possessing an oxyalkylene unit is usually from 0 to 500, preferably from 0 to 350, and more preferably from 5 to 250 mgKOH/g.

The phenolic resin which possesses an oxyalkylene unit may be produced in the absence of a catalyst, or in the presence of, for example, a basic catalyst or an acidic catalyst, by conducting an addition reaction with a compound possessing an epoxy ring. The reaction temperature is usually from 20 to 250°C, and preferably from 70 to 200°C. The reaction may be carried out under atmospheric pressure, or above atmospheric pressure, or even under reduced pressure. The reaction may be carried out in the presence of a solvent such as xylene or dimethylformamide or the above-mentioned dihydric alcohols and/or trihydric or higher alcohols which may be contained as a polyol component.

The dihydric alcohols include, for example:
(1) alkylene glycols of 2 to 12 carbon atoms such as ethylene glycol, 1,2-propylene glycol, 1,3-propylene glycol, 1,4-butanediol, neopentyl glycol, 1,4-butenediol, 1,5-pentanediol and 1,6-hexanediol;
(2) alkylene ether glycols such as diethylene glycol, triethylene glycol, dipropylene glycol, polyethylene glycol, polypropylene glycol and polytetramethylene glycol;
(3) cycloaliphatic diols of 6 to 30 carbon atoms such as 1,4-cyclohexanedimethanol and hydrogenated bisphenol A; as well as
(4) 2 to 8 mol alkylene oxide (ethylene oxide, propylene oxide and butylene oxide, for example) adducts of the above-mentioned bisphenols such as bisphenol A, bisphenol F and bisphenol S.

Among the above-mentioned dihydric alcohols, preferred are (1) and (4), and more preferred are ethylene glycol, 1,2-propylene glycol, and neopentyl glycol, 2 to 8 mol alkylene oxide adduct of bisphenol A, and 2 to 8 mols alkylene oxide adduct of bisphenol F. Ethylene glycol is preferred because it accelerates the rate of the reaction, and 1,2-propylene glycol and neopentyl glycol are preferred because they provide an excellent fixability at low temperature. 2 to 4 mol alkylene oxide adduct of bisphenol A is preferred because it affords an excellent resistance to offset to a toner.

Specific examples of trihydric or higher alcohols include:
(1) aliphatic polyhydric alcohols of 3 to 20 carbon atoms such as sorbitol, 1,2,3,6-hexanetetrol, 1,4-sorbitan, pentaerythritol, dipentaerythritol, tripentaerythritol, 1,2,4-butanetriol, 1,2,5-pentanetriol, glycerol, 2-methylpropanetriol, 2-methyl-1,2,4-butanetriol, trimethylolethane and trimethylol propane;
(2) aromatic polyhydric alcohols of 6 to 20 carbon atoms such as 1,3,5-trihydroxymethyl benzene; as well as
(3) alkylene oxide adducts of these alcohols.

Among these alcohols, preferred is (1) and especially preferred are glycerol, trimethylol propane, and pentaerythritol.

The weight proportion of the phenolic resin possessing an oxyalkylene unit / dihydric alcohols / trihydric or higher alcohols included in polyol components (B) is usually in a range of from 2 to 100 / from 0 to 98 / from 0 to 20; preferably from 4 to 70 / from 30 to 96 / 0 to 10; and more preferably from 4 to 50 / from 50 to 96 / from 0 to 5.

In accordance with the present invention, monocarboxylic acids and monoalcohols may also be used with polycarboxylic acid and its derivative (A) and polyol component (B) for the purpose of adjusting the molecular weight or controlling the reaction. Specific examples of these compounds are monocarboxylic acids such as benzoic acid, paraoxybenzoic acid, toluenecarboxylic acid, salicylic acid, acetic acid, propionic acid, and stearic acid; and monoalcohols such as benzyl alcohol, toluene-4- methanol and cylcohexanemethanol.

The proportion of polycarboxylic acid and its derivative (A) to polyol component (B) both of which may react to form a polyester resin of the present invention may be expressed as a ratio wherein hydroxyl group equivalent / carboxylic group equivalent ratio is usually 1 / (from 0.6 to 1.4), preferably 1 / (from 0.7 to 1.3), more preferably 1 / (from 0.8 to 1.2).

The proportion of the phenolic resin possessing an oxyalkylene unit in a polyester resin of this invention is usually 1 weight % or more, preferably from 3 to 70 weight %, and more preferably from 5 to 40 weight %. If this proportion is less than 1 weight %, resistance to offset the toner is insufficient.

Characteristics of the polyester resin which is, or is a component of, a toner binder of the present invention, and characteristics of a toner binder of the present invention are now illustrated.

The polyester resin for the present invention may have a peak molecular weight of from 3,500 to 12,000 inclusive as measured by gel permeation chromatography. It usually possesses an acid value (originating from carboxyl groups) of from 0.5 to 30, preferably from 2 to 20 mgKOH/g, and a hydroxyl value (originating from both alcoholic hydroxyl groups and phenolic hydroxyl groups) of from 5 to 200, preferably from 10 to 100 mgKOH/g. When the acid value is below 0.5, it causes a decrease in electrostatic charge; when the acid value exceeds 30, it causes an increase in the dependence on humidity for electrostatic charge; neither of these is preferred. When the hydroxyl value is below 5, it results in a lowering of toner fixing at low temperature; when the hydroxyl value exceeds 200, it may cause an increase in dependence on humidity for electrostatic charge, which are not preferred. The content of the gel moiety (substances insoluble in tetrahydrofuran) in the polyester resin is usually from 0 to 50 wt%, and preferably from 0 to 25 wt%, based on the weight of the polyester resin. When the content exceeds 50 wt%, difficulty arises in the production of the polyester.

The glass transition temperature (Tg) of the binder of the present invention is usually from 30 to 85°C, preferably from 40 to 80°C, and more preferably from 55 to 75°C. If Tg is below 30°C, it may tend to cause blocking or adhesion of toner grains, and if Tg exceeds 85°C, it causes lowering in fixing of toner at low temperature. The softening temperature of a binder of the present invention is usually from 70 to 160°C. Preferably from 80 to 150°C.

When the softening temperature of the toner is below 70°C, it tends to lower the resistance to offset of the toner, and when the softening temperature exceeds 160°C, it causes lowering of fixing of the toner at low temperature. If a binder of the present invention consists of only said polyester resin of the present invention, Tg and softening temperature of the polyester resin of the present invention may be in the above-mentioned range.

Components of a toner of the present invention wherein a toner binder of the present invention is contained are now further illustrated.

A toner binder of the present invention composed of said polyester resin, and optionally other resins for the toner binder may be mixed, if desired. Other resins for the toner binder include polystyrene, styrene-acryl copolymer, styrene-butadiene copolymer, epoxy resin and polyester resin other than the polyester resin of the present invention.

A binder of the present invention may be employed with colorants (C) or, if necessary, with other components (D) as a component for a toner.

Colorants (C) include such pigments or dyes as carbon black, for example, nigrosine dye, aniline blue, red oxide, acetylene black, monoazo dye, diazo dye, quinacridone, anthraquinone dye, chalco oil blue, copper phthalocyanine, indanthrene blue, benzine yellow, chrome yellow pigment, ultramarine yellow, duPont oil red, indanthrene blue, permanent brown FG, brilliant scarlet, malachite green oxalate, lamp black, rose Bengal, pigment green B, rhodamine B, solvent 35; and other pigments or dyes described in Jp. Pat. No. Tokkai. Hei. 1-277253, or Jp. Pat. No. Tokkai. Hei. 1-159759 except for the above-mentioned pigments of dyes. Colorants (C) are usually present in an amount of from 1 to 20 parts by weight preferably in an amount of from 1 to 15 parts by weight, based on 100 parts by weight of the binder.

Other components (D) are as follows.

### (1) Release agent (D1) (anti-offset agent)

Polyolefins such a polyethylene and polypropylene of low molecular weight may be used.

The number average molecular weight of the low molecular weight polyolefin is usually from 500 to 20,000, and its softening temperature (Ring and Ball Method) is usually from 80 to 180°C, prefably from 100 to 160°C. The melt viscosity of the polyethylene (co)polymer is usually from 10 to 5,000 cps (at 140°C), and the melt viscosity of the polypropylene is usually from 10 to 5,000 cps (at 160°C). Alternatively, a higher fatty acid, higher fatty acid metal salt, higher fatty acid ester, partially saponified fatty acid ester, higher fatty alcohol, paraffin wax, polyamide wax, natural wax, ester of polyhydric alcohol, silicon varnish or aliphatic fluorocarbon may be used. Most preferred is a wax having a softening temperature of from 60 to 150°C (by Ring and Ball Method).

The proportion of (D1) present is usually from 0 to 10 parts by weight, preferably from 0.5 to 5 parts by weight, based on 100 parts by weight of the binder.

### (2) Charge controlling agent

Conventionally known substances which are electrostatically charged as positive and/or negative, such as nigrosine series dyes and metal containing dyes may be used. Such nigrosine dyes and metal-containing dyes are described in US-A-4933252, and they are usually used in an amount of from 0 to 100 parts by weight, preferably from 0.1 to 5 parts by weight, based on 100 parts by weight of binder.

### (3) Fluidity improver

Inorganic particulates (primary particle diameter of 5 to 2 µm) may be used, such as silica fine powder, alumina titanium oxide, barium titanate, magnesium titanate, calcium titanate, strontium titanate, zinc oxide, quarts sand, clay, mica, diatomaceous earth, chrome oxide, iron oxide red, antimony trioxide, magnesium sulfide, zirconium oxide, barium sulfide, calcium carbonate, nitrogen carbide and silicon nitride; among these substances, preferred is silica fine powder, and most preferred is silica fine powder possessing a hydrophobic group such as a higher hydrocarbon group in its surface. The amount used is 0 to 5 parts by weight, preferably 0.01 to 2 parts by weight, based on 100 parts by weight of the binder.

### (4) Magnetic substance

Magnetic substances which are used for a magnetic toner include metals, alloys, and metal compounds containing substances such as ferrite, magnetite and chrome dioxide, as well as iron, cobalt and nickel which show ferromagnetism; or alloys whose elements indicate ferromagnetism after certain heat-treating, namely such alloys, so called Heusler's alloy, as magnanese-copper-aluminium, manganese-copper-stannum. These magnetic substances are homogeneously dispersed in toner as fine powder of 0.1 to 1 µm. The content of the magnetic substance when being used as magnetic toner is usually 15 to 80 parts by weight, preferably 40 to 70 parts by weight, based on 100 parts by weight of toner.

Furthermore, a polyester resin for the present invention may be allowed to react with a cross-linking agent to improve the toner's resistance to offset. That is, during a melt-kneading process for obtaining a toner, a toner binder of the present invention may be cross-linked into a part or the whole of a polyester resin of the invention which is a component of kneaded substances. Melt viscosity is elevated by cross-linking, and this results in further improving of resistance to offset for the toner. Such cross-linking agents may include resol type phenolic resin, hexamethylenetetramine, and compounds containing polyvalent metals (carboxylate or alkoxylate of polyvalent metals, organic metal complex, chelate compound, e.g.), of Al, Ba, Ca, Cd, Co, Cr, Cu, Fe, Mg, Mn, Ni, Pb, Sn, Sr, Zn; compounds possessing two or more epoxy groups in a molecule or peroxides. Among the above-mentioned cross-linking agents, preferred are hexametheylenetetramine and compounds containing polyvalent metals. The amount used of these cross-linking agents is usually from 0 to 10 parts by weight, and when present, the amount may be 1 to 10 parts by weight, based on 100 parts by weight of binder. A preferred amount is from 0 to 5 parts by weight, more preferably from 0 to 2 parts by weight, based on 100 parts by weight of binder.

The following illustrates methods for producing a polyester resin for the present invention and a toner of the present invention.

Methods for producing a polyester resin are illustrated specifically with examples. Firstly, polycarboxylic acid and its derivative (A) and polyol component (B) are mixed in a certain proportion, the mixture is allowed to undergo a condensation reaction, and thus the polyester resin of the present invention may be obtained. This reaction is usually carried out in the presence of catalyst at a temperature of from 150 to 300°C, and preferably from 170 to 280°C. As the reaction may be carried out under atmospheric pressure, reduced pressure, or above atmospheric pressure, after the reaction has proceeded to a certain degree, in-between 30 to 90 %, e.g., it is preferred that the reaction is carried out under reduced pressure down to 200 mmHg, preferably down to 25 mmHg, and further preferably down to 10 mmHg.

The above-mentioned catalyst may be a catalyst usually used for esterification including such metals as stannum, titanium, antimony, manganese, nickel, zinc, lead, iron, magnesium, calcium and germanium; and compounds including such metals (such as dibutyltin oxide, orthodibutyl titanate, tetrabutyltitante, zinc acetate, lead acetate, cobalt acetate, sodium acetate and antimony trioxide).

A polyester resin for the present invention may be obtained by stopping the reaction when the characteristics of the product such as acid value and softening temperature have reached a certain degree, or when the agitation torque of the reacting equipment or agitation power have reached a certain level.

The following illustrates a method of producing a toner for electrophotography employing a binder of the present invention, including colorants (C), and, if necessary, other additives (D).

After respective constituents beforementioned for a toner are dry-blended, the blend is melt-kneaded by an extrusion kneader, the kneaded substance is cooled down and ground. Next the ground product is further ground into a fine powder by a jet mill, the powder is classified into 3 to 30 µm, further adding a fluid improver, if necessary, and by homogeneously mixing the thus prepared substance, there is obtained a toner.

After producing a polyester resin, phenolic hydroxyl groups in the polyester resin of the present invention may be allowed to react with organic metal complexes, substrates of dyes or pigments, or to form a salt with a tertiary amine or phosphine for the purpose of controlling electrostatic charge of the toner, particularly during the melt-kneading process.

The following describes the effect of polyester resins employed in embodiments of the present invention.
(1) A polyester resin which is, or is a component of, a toner binder embodying the present invention possesses a structure wherein either a linear polyester or a slightly cross-linked polyester, which constitutes soft segments, is grafted onto a phenolic resin of the novolak type, which constitutes hard segments, through at least one oxyalkylene unit, and also possesses a moderate elasticity at an elevated temperature without decreasing its excellent fluidity. Accordingly, a toner which employs such a toner binder embodying the present invention is excellent in fixing at a lower temperature and in offset at elevated temperature, so the toner possesses suitable characteristics required for a highspeed copying machine.
(2) A polyester resin which is, or is a component of, a toner binder embodying the present invention may optionally control not only the acid value, but also the phenolic hydroxyl value. Therefore, there is an advantage that the friction charge amount of the toner which employs a toner binder of the present invention may be alterable as desired.
(3) A polyester resin which is, or is a component of, a toner binder embodying the present invention possesses a higher Tg in spite of a lower softening temperature. Therefore, a toner which employs this polyester resin possesses an excellent storage stability.
(4) A polyester resin which is, or is a component of, a toner binder embodying the present invention possesses toughness. Therefore, a toner which employs this polyester resin possesses an improved abrasion-resistance in friction in-between a toner and a carrier, and an excellent durability.
(5) A polyester resin which is, or is a component of, a toner binder embodying the present invention possesses a novolak resin structure for its framework, and during the process of production of the toner, cross-linking through a methylene group and/or a phenolic hydroxyl group may be caused, and therefore may provide a toner which possesses an exceedingly excellent resistance to offset at an elevated temperature.

In view of the above-mentioned, a toner, wherein a toner binder embodying the present invention containing said polyester resin as a component is employed, may be utilised especially in copying machines of various speeds and in printers.

The present invention is now described in more detail with reference to the following production examples, examples, examples for use, and comparative examples. All parts and % herein are respectively indicating weight parts and weight %, unless otherwise specified.

Respective materials which were used in the examples and comparative examples are abbreviated as follows:
(1) Novolak A: Phenol novolak resin with a nucleic number 4.4 (an average number of phenol nuclei in a molecule), and having a softening temperature of 81°C.
(2) Novolak B: Phenolic novolak resin with a nucleic number of 3.2, and having a softening temperature of 68°C.
(3) Novolak C: t-butylphenol novolak resin with a nucleic number of 5.0, and having a softening temperature of 110°C.
(4) Novolak D: o-cresolphenol novolak resin with a nucleic number of 7.2, and having a softening temperature of 97°C.
(5) Novolak E: Nonylphenol novolak resin with a nucleic number of 4.1, and having a softening temperature of 95°C.
(6) Glycol A: Polyoxypropylene(2.2)-2,2-bis (4-hydroxyphenyl )propane (having a hydroxyl group value of 315).
(7) Glycol B: Polyoxyethylene(2.3)-2.2-bis(4-hydroxyphenyl )propane (having a hydroxyl group value of 340).
(8) Glycol C: Poly(oxyethylene-oxypropylene)-bis-(4-hydroxyphenyl)methane (having a hydroxyl group value of 320).
(9) Glycol D: polyoxypropylene(3.1)-2.2-bis(4-hydroxyphenyl)propane (hydroxyl group value of 275).
(10) EG: Ethylene glycol
(11) NPG: Neopentyl glycol
(12) TPA: Terephthalic acid
(13) IPA: Isophthalic acid
(14) FA: Fumaric acid
(15) AA: Adipic acid
(16) DMT: Dimethyl terephthalate
(17) DSA: Dodecenylsuccinic anhydride
(18) TMA: Trimellitic anhydride
(19) DBTO: Dibutyltin oxide

The following illustrates methods for measuring characteristics of the oxyalkylene ether of the novolak type phenolic resin provided in the production examples, the examples and the comparative examples, and the characteristics of the polyester resin:

### 1. Acid number and hydroxyl value

The method which is specified in JIS K0070 was used. Dioxane and tetrahydrofuran and the like were used as solvents when a sample was not dissolved.

### 2. Glass transition temperature (Tg)

The method which is specified in ASTM D3418-82, DSC Method, was used.

### 3. Softening temperature

The softening temperature was measured by a Flow-tester (CFT-500, produced by Shimadzu Seisakusho Co., Ltd.), using a nozzle of 1.0mm∅ x 1.0mm, under conditions of load: 10kg, temperature raising speed: 5°C/min, then the temperature was determined when a half amount of the sample was extruded.

### 4. Molecular weight distribution

Molecular weight distribution was measured by gel-permeation chromatography (GPC).

A sample was kneaded by Labo Plastmill (produced by togo Seiki Industrials, Co., Ltd.) at a temperature of 120°C for 30 minutes before use.

Condition for measurement of molecular weight were as follows:
Apparatus: HLC-802A, produced by togo Soda Co., Ltd. Column: TSK gel, GMH6, two (produced by togo Soda Co., Ltd.)
Temperature of measurement: 25°C
Sample solution: THF solution of 0.5 weight %
Injection amount of solution: 200 µ1
Detector: Refractive index detector

In addition, a calibration curve of molecular weight was prepared using a standard polystyrene.

### Production Example 1 (NE1)

Into an autoclave, 1 mol of novolak A (455 g) was placed, and inlet air was substituted with nitrogen. Next, 1.5 g of triethylamine catalyst was added thereto, keeping the temperature at 120°C, 4.5 mol of polypropylene oxide, hereinafter abbreviated to PO, (261 g) was added little by little, and the reaction was allowed to terminate. Volatile substances were removed and oxyalkylene ether (NE1) thus obtained.

Formulation of NE1 and its characteristics are shown on Table 1.

### Production Example 2 (NE2)

Into the same reaction apparatus as that of Example 1, 1 mol of novolak A (455 g), 571 g of glycol D and 1.5 g of potassium hydroxide catalyst were added and mixed keeping the temperature at 120°C, and then 2 mol of PO (116 g) was added little by little and the reaction was allowed to be terminted. After the termination of the reaction, the catalyst was removed as usual and volatile substances were further removed, then the product was purified. Oxyalkylene ether (NE2), a novolak type phenolic resin which was diluted with glycol D, was obtained.

In the presence of alcoholic hydroxyl group and phenolic hydroxyl group, alkylene oxide (EO or PO) is known to preferentially add to phenolic hydroxyl group.

Prescription and characteristics of NE2 are shown in Table 1.

### Production Examples 3 to 8 (NE3 to NE8).

Oxyalkylene ethers (NE3 to NE8) of novolak type phenolic resins were obtained by the same method as that of Production example 1.

Formulation and characteristics of NE3 to NE8 are shown on Table 1.

Using the same type of reaction apparatus as that of Example 1, 1 mol of novolak D (850 g), 1 mol of bisphenol A (228 g), 10 g of trimethyl amine (30 % solution) as a catalyst, and 265 g of PO, the procedure of Example 1 was repeated and on oxyalkylene ether (NE9) of a novolak type phenolic resin was obtained.

Formulation of NE9 and its characteristics shown in Table 1.

**Table 1**

| Production Example | 1 | 2 | 3 | 4 | 5 | 6 | 7 | 8 | 9 |
|---|---|---|---|---|---|---|---|---|---|
| NE | NE1 | NE2 | NE3 | NE4 | NE5 | NE6 | NE7 | NE8 | NE9 |
| Novolac Resin Weight(g) | A 455 | A 455 | A 455 | B 327 | B 327 | C 790 | D 850 | E 935 | D 850 |
| Glycol D Bisphenol A | - - | 571 - | - - | - - | - - | - - | - - | - - | - 228 |
| EO PO | - 261 | - 116 | - 174 | - 203 | 154 - | 88 - | - 145 | 110 116 | - 435 |
| Catalyst(Tri-ethylamine) | 1.5 *1 | 1.5 | 1.5 | 1.2 | 1.2 | 1.5 | 2.0 | 2.0 | 6.0 *2 |
| Hydroxyl No. (mgKOH/g) | 341 | 350 | 383 | 332 | 369 | 308 | 396 | 192 | 334 |

| | | | | | | | | | |
|---|---|---|---|---|---|---|---|---|---|
| Remarks *1 Instead of triethylamine, potassium hydroxide was used as a catalyst. | | | | | | | | | |
| *2 Instead of triethylamine, trimethylamine was used as a catalyst. | | | | | | | | | |

### Example 1 (Resin A)

Into a reaction vessel equipped with a thermometer, an agitator including a torque detector, a cooling apparatus, and a nitrogen introducing inlet 940 parts of glycol D, 60 parts of NE 1, 376 parts of TPA, and 3.5 parts of DBTO were placed, and allowed to react at a temperature of 230 °C under the nitrogen stream. When the reaction mixture became clear. The reaction temperature was decreased to 200 °C and then the polyesterification reaction was continued under reduced pressure. The viscosity of the reaction mixutre was increased gradually, the reaction was stopped when the torque of the agitator reached a certain level and the polyester resin (A) of the present invention was thus obtained.

Formulation of resin A and its characteristics are shown in Table 2.

### Examples 2 to 7 (Resin B to G)

Using 0.05 parts of silicone series defoaming agent (SAG-47 produced by Nihon Unicar Co., Ltd.), polyester resins B to G of the present invention were obtained by the same method as that of Example 1 except for employing the raw materials shown in Table 2.

Respective formulations of resins B to G and respective characteristics are shown in Table 2.

### Example 8 (Resin H)

Into the same reaction vessel as that of Example 1, 264 parts of NPG, 146 parts of glycol A, 137 parts of glycol B, 53 parts of ether NE-5 employed in Production Example 5, 266 parts of IPA, 264 parts of DMT, and 4 parts of tetrabutyltitanate were placed, and then allowed to react while gradually raising the temperature to a value of from 180 °C to 220 °C.

### Example 9 (Resin I)

Using the raw materials as mentioned in Table 2, polyester resin I of the present invention was obtained by the same method as that of Example 1. However, the reaction temperature was kept at from 180°C to 200°C, and the reaction was allowed to stop when the acid value reached 17.

Formulation of the resin I and its characteristics are shown in Table 2.

### Example 10 (Resin J)

Into the same reaction apparatus, 950 parts of glycol B and 434 parts of TPA were placed, and allowed to react at a temperature of 230 °C until the acid value reached 1.5. Next, the reaction mixture was cooled to 190°C, 50 parts of NE9 which was obtained in Production Example 9 and 21 parts of DSA were added, and further polyesterification reaction was carried out. The viscosity of the reaction mixture was gradually increased, and the reaction was allowed to stop when the torque of the agitator reached a certain level, and polyester resin (J) of the present invention was thus obtained.

Formulation of the resin J and its characteristics are shown in Table 2.

**(Table 2)**

| Example | 1 | 2 | 3 | 4 | 5 | 6 | 7 | 8 | 9 | 10 |
|---|---|---|---|---|---|---|---|---|---|---|
| Polyester Resin | A | B | C | D | E | F | G | H | I | J |
| Component A part | | | | | | | | | | |
| TPA | 376 | 397 | 349 | | 324 | 262 | | | | 434 |
| IPA | | | | 392 | | | | 226 | | |
| DMT | | | | | | | 312 | 264 | | |
| AA | | | | | | | 26 | | | |
| FA | | | | | | | | | 298 | |
| DSA | | | | | | 89 | | | | 21 |
| TMA | | | | | | | | 64 | | |

| Component B part | | | | | | | | | | |
|---|---|---|---|---|---|---|---|---|---|---|
| Glycol A | | | | 600 | 700 | | 415 | 146 | 900 | |
| Glycol B | | 315 | | | | | | 137 | | 950 |
| Glycol C | | | | | | 320 | | | | |
| Glycol D | 940 | 585 | 600 | | | | | | | |
| EG | | | | | | | 31 | | | |
| NPG | | | | | | | | 264 | | |
| NE | 60 (NE1) | 100 (NE3) | 400 (NE2) | 400 (NE2) | 300 (NE7) | 200 (NE6) | 47 (NE4) | 53 (NE5) | 100 (NE8) | 50 (NE9) |
| Acid No. | | | | | | | | | | |
| (mgKOH/g) | 3.0 | 4.1 | 3.5 | 3.8 | 6 | 2.1 | 1.3 | 12 | 15 | 6.7 |
| Tg (°C) | 60 | 61 | 62 | 70 | 58 | 57 | 57 | 59 | 58 | 57 |
| Soft.Temp(°C) | 126 | 130 | 131 | 138 | 125 | 126 | 127 | 130 | 90 | 140 |

### Comparative Example 1 (Resin K)

The same procedure as that of Example 1 was repeated except that 60 parts of NE1 was replaced with 60 parts of trimethylolpropane. Comparative polyester resin K was obtained.

The acid number of the polyester resin K was 4.5, its Tg was 58 °C and its softening point was 132 °C.

### Comparative Example 2 (Resin L)

Into the same procedure reaction apparatus as that of Example 1, 950 parts of glycol B and 4334 parts of TPA were placed, and the mixture was allowed to react at 230 °C until its acid number reached 1.5. Next, the reaction solution was cooled to 190°C, 100 parts of TMA instead of 50 parts of NE9 which was obtained in Production Example 9 was added thereto, and polyesterification reaction was further carried out. As the viscosity of the reactant was gradually increased and the torque of the agitator reached at a point showing a certain level, the reaction was allowed to stop, and the comparative polyester resin L was thus obtained.

The acid number of the polyester resin L was 21, its Tg was 64 °C and its softening point was 143 °C.

Examples for Use 1 to 10 and Comparative Examples 1 and 2 Polyester resins of A to L which were obtained in the examples of 1 to 10 and the comparative examples of 1 and 2 were used as binders. Toner components of the following compositions were milled in a ball mill (see Table 3) and the mixture was melted and kneaded by an extrusion kneader, at 120-130 °C. The kneaded substance was then cooled down, ground, pulverized and classified, and toners of [1] to [13] whose average particle size was approximately 12 µm were thus respectively obtained. However as for the toner [9], fluidity improver was further added thereto after classification, mixed by a Henschel mixer, and then the toner was obtained.
* Carbon black "Carbon Black MA-100, produced by Mitsubishi Ind. Co., Ltd.
* Chromatic color pigment "Fastgen Magenta R-11 produced by Dainihou-inki Chemical Ind. Co., Ltd."
* Charge controller agent "Aizen Spiron Black TRH, produced by Hodogaya Chemical Ind. Co., Ltd."
* Release agent "Viscol 660P produced by Sanyo Chemcial Ind. Co., Ltd."
* Fluidity improver "Colloidal silica R972, produced by Japan Aerogil Co., Ltd."
* Cross-linking agent Hexamethylene tetramine

Characteristics of the obtained toners of [1] to [13] were evaluated by the following methods.

### (1) Friction charge amount

4 g of an obtained toner and 96 g of ferrite carrier F-100 (produced by Nihon Teppun Co., Ltd.) were agitated for 20 minutes, and then the friction charge amount was measured using a blow off charge detector produced by Toshiba Chemical Co., Ltd.

30 g of toner and 720 g of ferrite carrier F-100 were mixed to adjust the developer, a printing image test was carried out using duplicator of process speed of 150 mm/sec with varying temperature of the heat-roller, and the minimum fixing temperature and hot offset temperature were thus obtained.

Minimum fixing temperature was measured employing a friction tester specified in JIS L0849-1971, by determining the temperature of the heat-roller for which the fixing rate exceeded 70%. The fixing rate was measured by rubbing the rising surface for the toner with a rubbing white cotton cloth 10 times, and measuring the optical density of the image surface with a Macbeth reflection densitometer before and after rubbing. The fixing rate was then calculated from following equation.

Fixing rate (%) - (density of an image after rubbing)/(density of the image before rubbing) X 100.

The hot offset temperature was the temperature of the heat roller at which any spot was observed on a following copy-paper by visual observation.

### (3) Store stability

10 g of toner was poured into a glass tube and left for 24 hours under conditions of 50 °C X 40 %RH. The rsulting substances were then ranked into 4 grades according to the degree of toner coagulation.
Grade A --- no coagulation
Grade B --- little coagulation, but redispersing when giving a light shock to the glass tube.
Grade C --- approximately one fourth of toner was coagulated, no redispersing if giving a slightly light shock to a screw tube.
Grade D --- Degree of coagulation was remarkable and no redispersing if giving a strong striking to the screw tube.

### (4) Resistance to migration of plasticizer

A fixed image was placed in-between vinyl chloride sheets, and the sheets were left under the conditions of 20 g/ cm² loading at 40 °C for a week, and then the resultant was evaluated for whether or not there was any spot on the image and on the vinyl chloride sheets.

The collected results of evaluating characteristics of toners [1] to [13] are shown in Tables 3-a and 3-b.

**(Table 3-a)**

| | Example for Use | | | | | |
|---|---|---|---|---|---|---|
| | 1 | 2 | 3 | 4 | 5 | 6 |
| Toner | [1] | [2] | [3] | [4] | [5] | [6] |

| Composition of Toner(parts) | | | | | | |
|---|---|---|---|---|---|---|
| Resin | A | B | C | D | E | F |
| Parts | 87 | 87 | 87 | 87 | 87 | 87 |
| Carbon Black | 8 | 8 | 8 | 8 | 8 | 8 |
| Chromatic Color Pigment | | | | | | |
| Charge Controlling agent | 1 | 1 | 1 | 1 | 1 | 1 |
| Release Agent | | 4 | 4 | 4 | 4 | 4 |
| Cross-linking Agent | | | | | | |
| Fluidity Improver | | | | | | |

| Characteristics of Toner | | | | | | |
|---|---|---|---|---|---|---|
| Friction Charge Amount(µC/g) | -15 | -18 | -13 | -20 | -21 | -24 |
| Minimum Fixing Temp. (°C) | 137 | 147 | 142 | 145 | 136 | 133 |
| Offset Appearance Temp. (°C) | 210 | 220 | 210 | 205 | 210 | 205 |
| Store Stability | A | ← | ← | ← | ← | ← |
| Resist. to Mig. of Plas. | no | ← | ← | ← | ← | ← |

**(Table 3-b)**

| | Example for Use | | | | Comp. Ex. | | |
|---|---|---|---|---|---|---|---|
| | 7 | 8 | 9 | 10 | 11 | 1 | 2 |
| Toner | [7] | [8] | [9] | [10] | [11] | [12] | [13] |
| Composition of Toner(parts) | | | | | | | |
| Resin | G | H | I | J | F | K | L |
| Part | 87 | 87 | 95 | 87 | 87 | 87 | 87 |
| Carbon Black | 8 | 8 | | 8 | 8 | 8 | 8 |
| Chromatic Color Pigment | | | 5 | | | | |
| Charge Controlling Agent | 1 | 1 | | 1 | 1 | 1 | 1 |
| Release Agent | 4 | 4 | | 4 | 4 | 4 | 4 |
| Cross-linking Agent | | | | | I | | |
| Fluidity Improver | | | 0.5 | | | | |

| Characteristics of Toner | | | | | | | |
|---|---|---|---|---|---|---|---|
| Frict. Ch. Amt.(µC/g) | -17 | -18 | -16 | -23 | -22 | -17 | -19 |
| Min. Fixing Temp. (°C) | 152 | 153 | 118*1 | 142 | 142 | 155 | 167 |
| Offset App. Temp. (°C) | ≧ 240 | ≧ 240 | *1 200 | 215 | 240 | 180 | 210 |
| Store Stability | ← | ← | ← | ← | A | B | A |
| Resist. to Mig. of Plas. | ← | ← | ← | ← | no | spot | no |

| | | | | | | | |
|---|---|---|---|---|---|---|---|
| Remark: *1 Evaluated by a heat-roller made of silicone rubber and fixing apparatus having a silicon oil supplier device. | | | | | | | |

It can be seen from Table 3 that a toner whose binder employed a polyester resin embodying the present invention was excellent in toner quality for fixation (minimum fixation temperature and resistance to offset), store stability, resistance to migration of plasticizer, and the like.

Moreover, toner [12] (Comparative Example 1), wherein polyester resin which was cross-linked with trihydric alcohol (trimethylol propane) was used as a binder, was inferior to the toner embodying the present invention in resistance to offset, shelf stability, and resistance to migration of plasticizer. Toner [13] (Comparative Example 2) which employed polyester resin being cross-linked with tribasic carboxylic acid (trimellitic acid anhydride) as a binder was inferior to a toner embodying the present invention in low temperature fixing.

Using a toner [1] and a toner [2] in Example 1 and Example 2 on Table 3, continuous copying for 10,000 sheets were practiced. Picture quality after copying for 10,000 sheets was of the same quality as that at the beginning. A toner which employs a polyester resin embodying the present invention keeps good quality in spite of being subjected to friction for a long time and is therefore excellent in durability.

## Claims

1. Use, as a toner binder, of a polyester having units derived from a polyol, which polyol is an oxyalkylene ether of a phenolic resin.

2. Use according to claim 1, wherein the oxyalkylene ether has an average number of oxyalkylene units per molecule of from 2 to 15.

3. Use according to claim 1 or claim 2, wherein the oxyalkylene ether includes as a said oxyalkylene unit, an oxyethylene unit or an oxypropylene unit.

4. Use according to any preceding claim, wherein the polyester is obtainable from a reaction employing a polycarboxylic acid or its derivative, and a polyol comprising an oxyalkylene ether of a phenol-formaldehyde or phenol amine resin.

5. Use according to any preceding claim, wherein the oxyalkylene ether has a total hydroxyl value of from 50 to 500 inclusive.

6. Use according to any preceding claim, wherein the phenolic resin is a novolak type.

7. Use according to claim 6, wherein the phenolic resin is derived from a phenol compound selected from phenol, cresol, t-butylphenol, a styrenated phenol and nonylphenol; and a compound possessing an aldehyde or amine group selected from formalin, paraformaldehyde, trioxane and hexamethylene-tetramine.

8. Use according to claim 6 or claim 7, wherein the number average molecular weight of the novolak type phenolic resin is from 350 to 3,000 inclusive.

9. Use according to any one of claims 4 to 8, wherein the polycarboxylic acid or its derivative is selected from maleic acid, maleic anhydride, an alkylsuccinic acid, an alkylsuccinic anhydride, an alkenylsuccinic acid, an alkenylsuccinic anhydride, fumaric acid, phthalic acid, phthalic anhydride, isophthalic acid, terephthalic acid, and dimethyl terephthalate.

10. Use according to any preceding claim, wherein the polyester has a glass transition temperature of from 30 to 85°C inclusive and a softening temperature of from 70 to 160°C inclusive.

11. Use according to claim 10, wherein the polyester has a hydroxyl value of from 5 to 200 inclusive.

12. Use according to claim 10 or 11, wherein the polyester has an acid value of from 0.5 to 30 inclusive.

13. Use according to any preceding claim, wherein the polyester has a peak molecular weight of from 3,500 to 12,000 inclusive as measured by gel permeation chromatography.

14. Use according to any preceding claim, wherein the polyester additionally contains polyol units derived from a polyol comprising a diol selected from ethylene glycol, 1,2-propylene glycol, neopentyl glycol, a 2 to 4 mol alkylene oxide adduct of bisphenol A, and a 2 to 4 mol alkylene oxide adduct of bisphenol F.

15. Use according to any preceding claim, wherein the polyester is cross-linked by a cross-linking agent in an amount of from 1 to 10 parts inclusive by weight based on 100 parts by weight of the polyester.

16. Use according to claim 15, wherein the cross-linking agent is selected from a resol type phenolic resin, hexamethylenetetramine, a polyvalent metallic carboxylate, a polyvalent metallic alkoxylate, an organic metal complex and a compound having two or more epoxy groups.

17. A toner binder composition comprising (a) a polyester given and defined in any one of claims 1 to 14, and (b) a cross-linking agent and/or (c) an additional polymer capable of use as a toner binder resin.

18. A toner binder composition according to claim 17 which comprises a cross-linking agent (b) which is selected from a resol type phenolic resin, hexamethylenetetramine, a polyvalent metallic carboxylate, a polyvalent metallic alkoxylate, an organic metal complex and a compound having two or more epoxy groups.

19. A toner comprising, as a toner binder, a polyester as defined in any one of claims 1 to 14 and a colorant.

20. A toner according to claim 19 wherein the colorant is present in an amount of 1 to 20 parts inclusive by weight based on 100 parts of the polyester.

21. A toner according to claim 19 or 20, further comprising a cross-linking agent.

22. A toner according to any one of claims 19 to 21 further comprising a substance selected from a release agent in an amount of from 0.5 to 10 parts inclusive by weight, a magnetic substance in an amount of from 40 to 70 parts inclusive by weight, a charge controlling agent in an amount of from 0.1 to 5 parts inclusive by weight, and a fluidity improver in an amount is from 0.01 to 2 parts inclusive by weight, based on 100 parts by weight of said binder.

## Patentansprüche

1. Verwendung eines Polyesters, der von einem Polyol abgeleitete Einheiten aufweist, wobei das Polyol ein Oxyalkylenether eines Phenolharzes ist, als Bindemittel für Toner.

2. Verwendung nach Anspruch 1, worin der Oxyalkylenether eine durchschnittliche Anzahl an Oxyalkyleneinheiten pro Molekül von 2 bis 15 aufweist.

3. Verwendung nach Anspruch 1 oder 2, worin der Oxyalkylenether als eine solche Oxyalkyleneinheit eine Oxyethyleneinheit oder eine Oxypropyleneinheit umfaßt.

4. Verwendung nach einem der vorangegangenen Ansprüche, worin der Polyester durch eine Reaktion erhältlich ist, bei einer eine Polycarbonsäure oder ein Derivat davon sowie ein Polyol, das einen Oxyalkylenether eines Phenolformaldehyd- oder Phenolaminharzes umfaßt, eingesetzt werden.

5. Verwendung nach einem der vorangegangenen Ansprüche, worin der Oxyalkylenether eine Gesamt-Hydroxylzahl von 50 bis 500 (Grenzen eingeschlossen) aufweist.

6. Verwendung nach einem der vorangegangenen Ansprüche, worin das Phenolharz vom Novolak-Typ ist.

7. Verwendung nach Anspruch 6, worin das Phenolharz von einer aus Phenol, Kresol, t-Butylphenol, einem styrolisierten Phenol und Nonylphenol ausgewählten Phenolverbindung und einer Verbindung abgeleitet ist, die über eine Aldehyd- oder Aminogruppe verfügt, ausgewählt aus Formalin, Paraformaldehyd, Trioxan und Hexamethylentetramin.

8. Verwendung nach Anspruch 6 oder 7, worin das zahlenmittlere Molekulargewicht des Novolak-Phenolharzes von 350 bis 3.000 (Grenzen eingeschlossen) beträgt.

9. Verwendung nach einem der Ansprüche 4 bis 8, worin die Polycarbonsäure oder deren Derivat aus Maleinsäure, Maleinsäureanhydrid, einer Alkylbernsteinsäure, einem Alkylbernsteinsäureanhydrid, einer Alkenylbersteinsäure, einem Alkenylbersteinsäureanhydrid, Fumarsäure, Phthalsäure, Phthalsäureanhydrid, Isophthalsäure, Terephthalsäure und Dimethylterephthalat ausgewählt ist.

10. Verwendung nach einem der vorangegangenen Ansprüche, worin der Polyester eine Glastemperatur von 30 bis 85 °C (Grenzen eingeschlossen) und eine Erweichungstemperatur von 70 bis 160 °C (Grenzen eingeschlossen) aufweist.

11. Verwendung nach Anspruch 10, worin der Polyester eine Hydroxylzahl von 5 bis 200 (Grenzen eingeschlossen) aufweist.

12. Verwendung nach Anspruch 10 oder 11, worin der Polyester eine Säurezahl von 0,5 bis 30 (Grenzen eingeschlossen) aufweist.

13. Verwendung nach einem der vorangegangenen Ansprüche, worin der Polyester ein Molekulargewicht-Maximum von 3.500 bis 12.000 (Grenzen eingeschlossen), gemessen durch Gelpermeationschromatographie, aufweist.

14. Verwendung nach einem der vorangegangenen Ansprüche, worin der Polyester zusätzlich Polyoleinheiten enthält, die von einem Polyol abgleitet sind, das ein aus Ethylenglykol, 1,2-Propylenglykol, Neopentylglykol, einem Addukt von Bisphenol A mit 2 bis 4 Mol Alkylenoxid und einem Addukt von Bisphenol F mit 2 bis 4 Mol Alkylenoxid ausgewähltes Diol umfaßt.

15. Verwendung nach einem der vorangegangenen Ansprüche, worin der Polyester mittels eines Vernetzers in einer Menge von 1 bis 10 (Grenzen eingeschlossen) Gewichtsteilen, bezogen auf 100 Gewichtsteile des Polyesters, vernetzt ist.

16. Verwendung nach Anspruch 15, worin der Vernetzer aus einem Phenolharz vom Resol-Typ, Hexamethylentetramin, einem mehrwertigen Metallcarboxylat, einem mehrwertigen Metallalkoxylat, einem organischen Metallkomplex und einer Verbindung mit zwei oder mehr Epoxygruppen ausgewählt ist.

17. Toner-Bindemittelzusammensetzung, umfassend (a) einen Polyester nach einem der Ansprüche 1 bis 14 und (b) einen Vernetzer und/oder (c) ein zusätzliches Polymer, das zur Verwendung als Toner-Bindemittelharz geeignet ist.

18. Toner-Bindemittelzusammensetzung nach Anspruch 17, das einen Vernetzer (b) umfaßt, der aus einem Phenolharz vom Resol-Typ, Hexamethylentetramin, einem mehrwertigen Metallcarboxylat, einem mehrwertigen Metallalkoxylat, einem organischen Metallkomplex und einer Verbindung mit zwei oder mehr Epoxygruppen ausgewählt ist.

19. Toner, der als Toner-Bindemittel einen Polyester nach einem der Ansprüche 1 bis 14 und eine Färbemittel umfaßt.

20. Toner nach Anspruch 19, worin das Färbemittel in einer Menge von 1 bis 20 Gewichtsteilen (Grenzen eingeschlossen), bezogen auf 100 Teile des Polyesters, enthalten ist.

21. Toner nach Anspruch 19 oder 20, der weiters einen Vernetzer umfaßt.

22. Toner nach einem der Ansprüche 19 bis 21, der weiters eine Substanz umfaßt, die aus einem Trennmittel in einer Menge von 0,5 bis 10 Gewichtsteilen (Grenzen eingeschlossen), einer magnetischen Substanz in einer Menge von 40 bis 70 Gewichtsteilen (Grenzen eingeschlossen), einem Aufladungssteuerungsmittel in einer Menge von 0,1 bis 5 Gewichtsteilen (Grenzen eingeschlossen) und einem Fließfähigkeitsverbesserer in einer Menge von 0,01 bis 2 Gewichtsteilen (Grenzen eingeschlossen), bezogen auf 100 Gewichtsteile des Bindemittels, ausgewählt ist.

## Revendications

1. Utilisation, en tant que liant de toner, d'un polyester ayant des unités dérivées d'un polyol, lequel polyol est un oxyalkylène éther d'une résine phénolique.

2. Utilisation selon la revendication 1, où l'oxyalkylène éther a un nombre moyen d'unités oxyalkylène par molécule de 2 à 15.

3. Utilisation selon la revendication 1 ou la revendication 2, où l'oxyalkylène éther inclut en tant que ladite unité oxyalkylène, une unité oxyéthylène ou une unité oxypropylène.

4. Utilisation selon l'une quelconque des revendications précédentes, où le polyester peut être obtenu à partir d'une réaction employant un acide polycarboxylique ou son dérivé, et un polyol comprenant un oxyalkylène éther d'une résine phénol-formaldéhyde ou phénol-amine.

5. Utilisation selon l'une quelconque des revendications précédentes, où l'oxyalkylène éther a une valeur totale d'hydroxyle de 50 à 500 inclus.

6. Utilisation selon l'une quelconque des revendications précédentes, où la résine phénolique est du type novolaque.

7. Utilisation selon la revendication 6, où la résine phénolique est dérivée d'un composé phénol sélectionné parmi le phénol, le crésol, le t-butylphénol, un phénol styréné et le nonylphénol ; et un composé possédant un groupe aldéhyde ou amine sélectionné parmi la formaline, le paraformaldéhyde, le trioxane et l'hexaméthylène-tétramine.

8. Utilisation selon la revendication 6 ou la revendication 7, où le poids moléculaire moyen en nombre de la résine phénolique du type novolaque est de 350 à 3000 inclus.

9. Utilisation selon l'une quelconque des revendications 4 à 8, où l'acide polycarboxylique ou son dérivé est sélectionné parmi l'acide maléique, l'anhydride maléique, un acide alkylsuccinique, un anhydride alkylsuccinique, un acide alkénylsuccinique, un anhydride alkénylsuccinique, l'acide fumarique, l'acide phtalique, l'anhydride phtalique, l'acide isophtalique, l'acide téréphtalique et le diméthyl téréphtalate.

10. Utilisation selon l'une quelconque des revendications précédentes, où le polyester a une température de transition vitreuse de 30 à 85°C inclus et une température de ramollissement de 70 à 160°C inclus.

11. Utilisation selon la revendication 10, où le polyester a une valeur d'hydroxyle de 5 à 200 inclus.

12. Utilisation selon la revendication 10 ou 11, où le polyester a une valeur d'acide de 0,5 à 30 inclus.

13. Utilisation selon l'une quelconque des revendications précédentes, où le polyester a un poids moléculaire pic de 3500 à 12 000 inclus mesuré par une chromatographie de perméation de gel.

14. Utilisation selon l'une quelconque des revendications précédentes, où le polyester contient additionnellement des unités polyol dérivées d'un polyol comprenant un diol sélectionné parmi l'éthylène glycol, le 1,2-propylène glycol, le néopentyl glycol, un produit d'addition de 2 à 4 moles d'alkylène oxyde du bisphénol A, et un produit d'addition de 2 à 4 moles d'alkylène oxyde du bisphénol F.

15. Utilisation selon l'une quelconque des revendications précédentes, où le polyester est réticulé par un agent de réticulation en une quantité de 1 à 10 parties inclus en poids sur la base de 100 parties en poids du polyester.

16. Utilisation selon la revendication 15, où l'agent de réticulation est sélectionné parmi une résine phénolique du type résol, l'hexaméthylènetétramine, un carboxylate métallique polyvalent, un alcoxylate métallique polyvalent, un complexe métallique organique et un composé ayant 2 ou plus groupes époxy.

17. Composition de liant de toner comprenant (a) un polyester donné et défini dans l'une quelconque des revendications 1 à 4, et (b) un agent de réticulation et/ou (c) un polymère additionnel capable d'utilisation en tant que résine de liant de toner.

18. Composition de liant de toner selon la revendication 17 qui comprend un agent de réticulation (b) qui est sélectionné parmi une résine phénolique du type résol, l'hexaméthylènetétramine, un carboxylate métallique polyvalent, un alcoxylate métallique polyvalent, un complexe métallique organique et un composé ayant deux ou plus groupes époxy.

19. Toner comprenant, en tant que liant de toner, un polyester tel que défini à l'une quelconque des revendications 1 à 14 et un colorant.

20. Toner selon la revendication 19 où le colorant est présent en une quantité de 1 à 20 parties inclus en poids sur la base de 100 parties du polyester.

21. Toner selon la revendication 19 ou 20, comprenant de plus un agent de réticulation.

22. Toner selon l'une quelconque des revendications 19 à 21 comprenant de plus une substance sélectionnée parmi un agent de libération en une quantité de 0,5 à 10 parties inclus en poids, une substance magnétique en une quantité de 40 à 70 parties inclus en poids, un agent de contrôle de charge en une quantité de 0,1 à 5 parties inclus en poids, et un exhausteur de fluidité en une quantité de 0,01 à 2 parties inclus en poids, sur la base de 100 parties en poids du dit liant.
